# EUROPÄISCHE PATENTANMELDUNG

(11) **EP 0 924 619 A2**
(43) Veröffentlichungstag der Anmeldung: **23.06.1999**
(21) Anmeldenummer: 98122517.0
(22) Anmeldetag: 27.11.1998
(51) Int. Cl.: G06F 11/00

(54) **Programmgesteuerte Einheit**

(30) Priorität: 19.12.1997 DE 19756850
(71) Anmelder: SIEMENS AKTIENGESELLSCHAFT, 80333 München (DE)
(72) Erfinder: Martin, Gerhard, 80796 München (DE); Sheedy, Gary, Cupertino, CA 95014 (US)

(57) **Zusammenfassung**

Die beschriebene programmgesteuerte Einheit zeichnet sich dadurch aus, daß sie dazu ausgelegt ist, in einen ausgewählten Bereich der internen Speichereinrichtung zu schreibende Daten zusätzlich zum Einschreiben der Daten in die interne Speichereinrichtung aus der programmgesteuerten Einheit auszugeben.

## Beschreibung

Die vorliegende Erfindung betrifft eine Vorrichtung gemäß dem Oberbegriff des Patentanspruchs 1, d.h. eine programmgesteuerte Einheit mit einer internen Speichereinrichtung.

Programmgesteuerte Einheiten sind beispielsweise Mikroprozessoren, Mikrocontroller, Signalprozessoren und dergleichen.

Insbesondere bei der Entwicklung von programmgesteuerte Einheiten enthaltenden Systemen, aber auch bei anderen Gelegenheiten, ist es mitunter wünschenswert, die ordnungsgemäße Ausführung von von der betreffenden programmgesteuerten Einheit ausgeführten Programmen zu kontrollieren und/oder die Ursache für Fehler bei der Programmausführung zu lokalisieren.

Hierzu bedient man sich in der Regel entweder eines Debuggers oder eines Emulators.

Debugger sind einfache Hilfsmittel, die zwar billig in der Anschaffung, dafür aber nicht immer und überall einsetzbar sind. Die beschränkte Einsatzfähigkeit hat ihre Ursache unter anderem darin, daß die Ausführung des zu überwachenden Programmes während des Betriebes des Debuggers immer wieder unterbrochen werden muß. Dies hat beispielsweise zur Folge, daß ein Debugger zur Überwachung von Anwendungen in Echtzeitsystemen nicht oder allenfalls bedingt geeignet ist.

Im Gegensatz hierzu sind Emulatoren in der Lage, die Ausführung eines zu überwachenden Programmes ohne zwischenzeitliches Anhalten der programmgesteuerten Einheit durchzuführen. Dadurch können auch Anwendungen in Echtzeitsystemen überprüft werden. Andererseits sind Emulatoren sehr komplizierte und teure Geräte, die nicht immer und überall verfügbar sind. Emulatoren erfordern darüber hinaus Eingriffe in das die programmgesteuerte Einheit enthaltende System, wodurch dieses während des Tests nicht unter den tatsächlichen Einsatzbedingungen betrieben werden kann.

Der Erfindung liegt daher die Aufgabe zugrunde, eine Maßnahme zu finden, die auf einfache Weise eine Überwachung der programmgesteuerten Einheit und/oder der von dieser ausgeführten Programme ermöglicht.

Diese Aufgabe wird erfindungsgemäß durch die im kennzeichnenden Teil des Patentanspruchs 1 beanspruchten Merkmale gelöst.

Demnach ist vorgesehen, daß die programmgesteuerte Einheit dazu ausgelegt ist, in einen ausgewählten Bereich der internen Speichereinrichtung zu schreibende Daten zusätzlich zum Einschreiben der Daten in die interne Speichereinrichtung aus der programmgesteuerten Einheit auszugeben.

Die zumindest teilweise Ausgabe von innerhalb der programmgesteuerten Einheit zu speichernden Daten ermöglicht es auf äußerst einfache Weise, diese und damit auch die Funktion der programmgesteuerten Einheit und/oder den Ablauf der von dieser ausgeführten Programme ohne teure Zusatzgeräte unter realen Bedingungen zu überwachen.

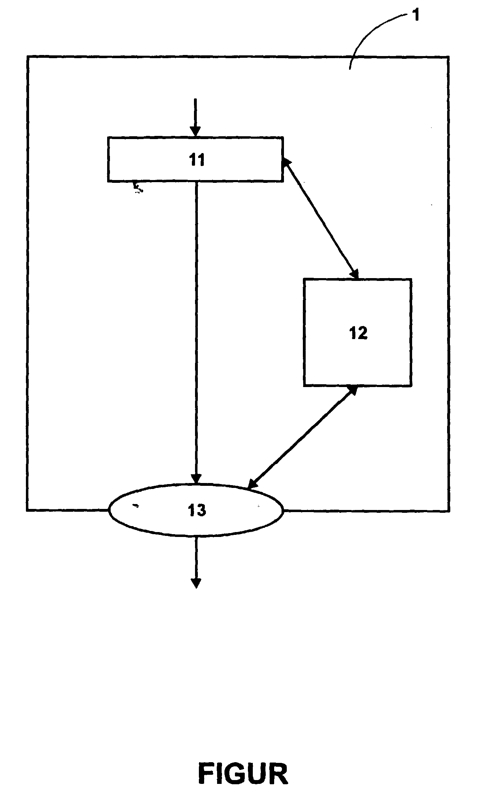

Vorteilhafte Weiterbildungen der Erfindung sind den Unteransprüchen, der folgenden Beschreibung und der Zeichnung entnehmbar.

Die Erfindung wird nachfolgend anhand eines Ausführungsbeispiels unter Bezugnahme auf die Zeichnung näher erläutert.

Die Figur zeigt ausschnittsweise schematisch den Aufbau eines Ausführungsbeispiels der erfindungsgemäßen programmgesteuerten Einheit.

Die im folgenden näher betrachtete programmgesteuerte Einheit ist ein Mikrocontroller. Die Erfindung ist hierauf jedoch nicht beschränkt; sie ist auch bei beliebigen anderen programmgesteuerten Einheiten wie Mikroprozessoren, Signalprozessoren etc. anwendbar.

Die programmgesteuerte Einheit führt im betrachteten Beispiel ein ein Echtzeit-Betriebssystem (RTOS) repräsentierendes Programm aus, durch das im Ansprechen auf vorbestimmte Ereignisse sofort oder später zugeordnete Anwenderprogramme (Tasks) zur Ausführung gebracht werden. Die programmgesteuerte Einheit ist dabei dazu ausgelegt, ohne Unterbrechung oder sonstige Beeinflussung des auszuführenden Programmes Daten auszugeben, so daß gegebenenfalls auftretende Taskwechsel in Echtzeit verfolgbar sind.

Alternativ oder zusätzlich können jedoch auch Daten ausgegeben werden, die beliebige andere Zustände, Ereignisse, Parameter, (Zwischen-)Ergebnisse und/oder Auswirkungen der programmgesteuerten Einheit und/oder des von dieser ausgeführten Programmes repräsentieren, wobei die besagten Daten auch dann nutzbringend verwertet werden können, wenn kein Echtzeit-Betriebssystem zur Anwendung kommt.

Der Mikrocontroller ist in der Figur mit dem Bezugszeichen 1 bezeichnet; von seinem inneren Aufbau sind lediglich ein Register 11, eine Steuereinheit 12 und eine Schnittstelle 13 gezeigt.

Der Mikrocontroller 1 ist im betrachteten Beispiel dazu ausgelegt, daß Daten, die in das Register 11 geschrieben werden, zusätzlich unter Steuerung durch die Steuereinheit 12 über die Schnittstelle 13 aus dem Mikrocontroller ausgegeben werden. Wie später noch näher erläutert werden wird, können die über die Schnittstelle 13 ausgegebenen Daten auch noch weitere Informationen wie beispielsweise (Fehler-)Kennungen und/oder die Herkunft und/oder die Bedeutung der Daten repräsentierende Angaben umfassen.

Es sei bereits an dieser Stelle darauf hingewiesen, daß nicht nur in einem Register gespeicherte Daten, sondern alternativ oder zusätzlich auch in anderen internen Speichereinrichtungen des Mikrocontrollers (im internem RAM, internen Flash-EPROM etc.) gespeicherte Daten im Ansprechen auf das Überschreiben derselben ausgegeben werden können. D.h., der in der Figur mit dem Bezugszeichen 11 bezeichnete Block muß nicht unbedingt ein Register sein, sondern kann auch eine beliebige andere interne Speichereinrichtung der programmierbaren Einheit oder ein ausgewählter Bereich derselben sein.

Das Register 11 sei im betrachteten Beispiel ein Task-ID-Register, in das Daten geschrieben werden, die die gerade ausgeführte Task bezeichnen. Die die momentan ausgeführte Task bezeichnenden Daten können beispielsweise aus der Anfangsadresse der gerade aktiven Task bestehen und werden als "Magic Number" bezeichnet. Eine solche Magic Number wird von fast allen Echtzeit-Betriebssystemen verwaltet. Im Register 11 können jedoch auch Daten gespeichert sein, die beliebige andere Zustände, Ereignisse, Parameter, (Zwischen-) Ergebnisse und/oder Auswirkungen der programmgesteuerten Einheit und/oder des von dieser ausgeführten Programmes repräsentieren

Die Schnittstelle 13 ist entweder eine serielle Schnittstelle, über welche die auszugebenden Daten einzeln Bit für Bit ausgegeben werden, oder eine parallele Schnittstelle, über welche die auszugebenden Daten parallel auf einen externen Bus gegeben werden. Die Pins, über welche die Daten ausgegeben werden, sind vorzugsweise ausschließlich zur Ausgabe des Inhalts des Registers 11 (und gegebenenfalls der zuvor erwähnten Zusatzinformation) reserviert.

Die Daten, die (gegebenenfalls zusammen mit den erwähnten Zusatzinformationen) über die Schnittstelle 13 ausgegeben werden, sind im betrachteten Beispiel die im Register 11 gespeicherten Daten, wobei diese Daten jedoch nur immer dann ausgegeben werden, wenn neue Daten ins Register 11 geschrieben werden. Neu ins Register 11 geschriebene Daten werden vorzugsweise im wesentlichen zeitgleich mit dem Einschreiben derselben ins Register zur Schnittstelle 13 übertragen.

Der Steuereinheit 12 obliegt es, die Übermittlung der auszugebenden Daten zur Schnittstelle 13 und die Ausgabe der Daten durch die Schnittstelle 13 zu koordinieren. Sie stellt dabei unter anderem sicher, daß nur dann Daten zur Schnittstelle 13 übertragen und von dieser ausgegeben werden, wenn das Register 11 neu beschrieben wird oder wurde und wenn durch die Übertragung der Daten zur Schnittstelle 13 in dieser nicht Daten überschrieben werden, die noch nicht ausgegeben wurden.

Die zuletzt genannte Bedingung ist insbesondere dann von Bedeutung, wenn die Ausgabe der Daten aus der Schnittstelle seriell und mithin relativ langsam erfolgt.

Wenn durch die Übertragung eines neuen Registerinhalts zur Schnittstelle 13 dort noch nicht ausgegebene Daten überschrieben werden würden, wird die Übertragung durch die Steuereinheit 12 verhindert oder zumindest verzögert. Zusätzlich wird eine (Fehler-)Kennung gesetzt, durch die signalisiert wird, daß die Ausgabe des Inhalts des Registers 11 durch die Schnittstelle 13 gerade lückenhaft oder verzögert erfolgt oder erfolgt ist. Die besagte Kennung gehört zu den vorstehend bereits erwähnten Zusatzinformationen, die zusammen mit dem eigentlich interessierenden neuen Inhalt des Registers 11 aus dem Mikrocontroller ausgegeben werden. Der gesetzte Zustand dieser Kennung zeigt an, daß die ausgegebenen Daten vorübergehend keine genauen Rückschlüsse auf die tatsächlichen Verhältnisse bzw. Vorgänge erlauben.

Insbesondere wenn "nur" oder in erster Linie die Registerinhalte des Registers 11 (und nicht oder weniger die Zeitpunkte von Registerinhalts-Veränderungen) interessieren, die Registerinhalte also auch bei zeitlich verzögerter Ausgabe von Nutzen sind, kann zwischen dem Register 11 und der Schnittstelle 13 ein in der Figur nicht gezeigter Puffer (beispielsweise eine mehrere Worte umfassendes FIFO-Register) vorgesehen sein, in welchem mehrere Registerinhalte (des Registers 11) zwischenspeicherbar sind. Dadurch kann erreicht werden, daß keine oder zumindest weniger Registerinhalte wegen einer Überlastung der Schnittstelle bei der Ausgabe ausgelassen werden (müssen). Die vorstehend erwähnte (Fehler-) Kennung wäre dann jedoch vorzugsweise zusätzlich oder alternativ (auch) immer dann zu setzen, wenn der Puffer voll ist oder überläuft.

Die Ausgabe von die momentan ausgeführte Task bezeichnenden Daten erlaubt es auf äußerst einfache Weise, die im Mikrocontroller erfolgende Ablaufsteuerung zu überwachen, und zwar nicht nur hinsichtlich der Reihenfolge, in welcher die einzelnen Tasks zur Ausführung kommen, sondern auch hinsichtlich der Taskwechsel-Zeitpunkte (der Zeitdauern, während welcher die jeweiligen Tasks ausgeführt werden). Die hierfür vorzusehenden Maßnahmen erfordern weder beim Mikrocontroller noch bei der Auswertung der über die Schnittstelle 13 ausgegebenen Informationen einen besonders großen Aufwand. Damit ist es schnell und einfach, möglich, bestimmte Fehler in dem den Mikrocontroller enthaltenen System oder in dem vom Mikrocontroller ausgeführten Programm ohne aufwendige und teure Meßinstrumente wie Emulatoren, Logikanalysatoren etc. zu lokalisieren. In vielen Fällen kann auf die Verwendung von Emulatoren, Logikanalysatoren etc. gänzlich verzichtet werden, wodurch auch kleinere Unternehmen und Ingenieurbüros in die Lage versetzt werden, komplexe Systeme zu entwickeln.

Entsprechendes gilt für den Fall, daß die über die Schnittstelle 13 ausgegebenen Daten einzelne Abschnitte von nicht in einem Echtzeit-Betriebssystem ausgeführten Programm (insbesondere Unterprogramme, Funktionen etc.) beispielsweise durch eine mit der erwähnten Magic Number vergleichbare Angabe bezeichnen. Dann kann auch der Ablauf von nicht in Echtzeit-Betriebssystemen ausgeführten Programmen verfolgt werden.

Für den Fall, daß ein vorhandener Fehler nicht ohne Emulator, Logikanalysator etc. lokalisiert werden kann, können die über die Schnittstelle 13 ausgegebenen Daten dazu verwendet werden, einen anzuschließenden Emulator, Logikanalysator etc. zu triggern.

Wie vorstehend bereits erwähnt wurde, können zusätzlich oder alternativ zu den die gerade ausgeführte Task bezeichnenden Daten (dem Inhalt des Registers 11) auch die Inhalte von einem oder mehreren weiteren Registern oder sonstigen internen Speicherbereichen des Mikrocontrollers 1 über die Schnittstelle 13 ausgegeben werden. Falls über die eine Schnittstelle 13 regelmäßig oder unregelmäßig abwechselnd aufeinanderfolgend die Daten mehrerer Register oder Speicherbereiche ausgegeben werden sollen, wird vorzugsweise zusammen mit den eigentlich interessierenden neuen Register- oder Speicherbereichsinhalten eine Zusatzinformation übertragen, die insbesondere die Bedeutung und/oder die Herkunft der betreffenden Daten signalisiert.

Es erweist sich für die Überwachung des Mikrocontrollers und/oder des von diesem ausgeführten Programmes vorteilhaft, wenn das Register (die Register) und/oder ein sonstiger Speicherbereich (sonstige Speicherbereiche), dessen (deren) Inhalt bei Veränderungen über die Schnittstelle 13 ausgegeben wird (werden), zumindest teilweise frei auswählbar ist (sind). Dies kann beispielsweise durch Vorsehen eines oder mehrerer Multiplexer bewerkstelligt werden, welche der Steuereinheit 12 und/oder der Schnittstelle 13 vorgeschaltet sind; die besagten Multiplexer können dabei hardwaremäßig (beispielsweise durch an den Mikrocontroller angelegte Signale), oder softwaremäßig (durch das durch den Mikrocontroller auszuführende Programm) angesteuert werden.

Alternativ oder zusätzlich kann vorgesehen werden, daß die Daten, deren Veränderung von Interesse sein kann, wahlweise in beliebige Register bzw. Speicherbereiche des Mikrocontrollers gespeichert werden können. Dann müssen die Daten, deren Ausgabe interessiert, einfach nur in einem Register oder sonstigen Speicherbereich gespeichert werden, dessen Inhalt bei einer Veränderung über die Schnittstelle 13 ausgegeben wird.

Unabhängig von den Einzelheiten der praktischen Realisierung ist es bei der beschriebenen programmgesteuerten Einheit auf äußerst einfache Weise möglich, diese und/oder den Ablauf der von dieser ausgeführten Programme zu überwachen.

## Patentansprüche

1. Programmgesteuerte Einheit mit einer internen Speichereinrichtung (11),
**dadurch gekennzeichnet,**
daß die programmgesteuerte Einheit dazu ausgelegt ist, in einen ausgewählten Bereich der internen Speichereinrichtung zu schreibende Daten zusätzlich zum Einschreiben der Daten in die interne Speichereinrichtung aus der programmgesteuerten Einheit auszugeben.

2. Programmgesteuerte Einheit nach Anspruch 1,
**dadurch gekennzeichnet,**
daß das Einschreiben der Daten in die interne Speichereinrichtung (11) und die Übertragung dieser Daten zu einer diese ausgebenden Schnittstelle (13) der programmgesteuerten Einheit im wesentlichen gleichzeitig erfolgen.

3. Programmgesteuerte Einheit nach Anspruch 2,
**dadurch gekennzeichnet,**
daß die programmgesteuerte Einheit dazu ausgelegt ist, die Übertragung die Daten zur Schnittstelle (13) zu verhindern oder zu verzögern, wenn dadurch in der Schnittstelle noch nicht ausgegebene Daten überschrieben werden würden.

4. Programmgesteuerte Einheit nach einem der vorhergehenden Ansprüche,
**dadurch gekennzeichnet,**
daß der Bereich der internen Speichereinrichtung, dessen Daten aus der programmgesteuerten Einheit ausgegeben werden, ein Register oder einen sonstigen Speicherbereich umfaßt, in welchem Daten gespeichert werden, die die von der programmgesteuerten Einheit momentan ausgeführte Task und/oder den momentan ausgeführten Abschnitt des in der programmgesteuerten Einheit ablaufenden Programmes bezeichnen.

5. Programmgesteuerte Einheit nach einem der vorhergehenden Ansprüche,
**dadurch gekennzeichnet,**
daß der Bereich der internen Speichereinrichtung, dessen Inhalt aus der programmgesteuerten Einheit ausgegeben wird, ein aus mehreren Bereichen auswählbarer Bereich ist.

6. Programmgesteuerte Einheit nach einem der vorhergehenden Ansprüche,
**dadurch gekennzeichnet,**
daß die programmgesteuerte Einheit dazu ausgelegt ist, abwechselnd Inhalte verschiedener Bereiche der internen Speichereinrichtung auszugeben.

7. Programmgesteuerte Einheit nach einem der vorhergehenden Ansprüche,
**dadurch gekennzeichnet,**
daß die programmgesteuerte Einheit dazu ausgelegt ist, in den Bereich der internen Speichereinrichtung, dessen Inhalt aus der programmgesteuerten Einheit ausgegeben wird, wahlweise verschiedene Parameter repräsentierende Daten zu speichern.

8. Programmgesteuerte Einheit nach einem der vorhergehenden Ansprüche,
**dadurch gekennzeichnet,**
daß die programmgesteuerte Einheit dazu ausgelegt ist, zusammen mit dem neuen Inhalt des ausgewählten Bereiches der internen Speichereinrichtung zusätzliche Informationen auszugeben.

9. Programmgesteuerte Einheit nach Anspruch 8,
**dadurch gekennzeichnet,**
daß die zusätzlichen Informationen die Information umfassen, daß die Datenausgabe lückenhaft oder verzögert erfolgt.

10. Programmgesteuerte Einheit nach Anspruch 8 oder 9,
**dadurch gekennzeichnet,**
daß die zusätzlichen Informationen Angaben über die Herkunft der Daten und/oder den durch die Daten repräsentierten Parameter umfaßt.
